(19) **Europäisches Patentamt / European Patent Office / Office européen des brevets**

(11) **EP 2 850 715 B1**

(12) **FASCICULE DE BREVET EUROPEEN**

(45) Date de publication et mention de la délivrance du brevet:
**20.02.2019 Bulletin 2019/08**

(21) Numéro de dépôt: **13727280.3**

(22) Date de dépôt: **13.05.2013**

(51) Int Cl.:
*H02J 7/00* (2006.01)      *B60L 11/18* (2006.01)
*H01M 10/42* (2006.01)      *H01M 10/44* (2006.01)

(86) Numéro de dépôt international:
**PCT/FR2013/051042**

(87) Numéro de publication internationale:
**WO 2013/171416 (21.11.2013 Gazette 2013/47)**

(54) **EQUILIBRAGE DE CHARGE POUR UNE BATTERIE**

LADUNGSAUSGLEICH FÜR BATTERIE

CHARGE BALANCING FOR BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2012 FR 1254446**

(43) Date de publication de la demande:
**25.03.2015 Bulletin 2015/13**

(73) Titulaires:
• **Renault s.a.s**
  **92100 Boulogne-Billancourt (FR)**
• **Commissariat à l'Energie Atomique et aux Energies Alternatives**
  **75015 Paris (FR)**

(72) Inventeurs:
• **LUCEA, Marc**
  **F-78000 Versailles (FR)**
• **GARNIER, Laurent**
  **F-69970 Marennes (FR)**

(74) Mandataire: **Radault, Gabrielle et al**
  **Fédit-Loriot**
  **38, avenue Hoche**
  **75008 Paris (FR)**

(56) Documents cités:
EP-A2- 2 320 537        WO-A1-97/16879
WO-A2-2011/095610       FR-A1- 2 956 260
US-A- 6 072 300         US-A1- 2005 077 879
US-A1- 2008 116 850     US-A1- 2011 121 645
US-B1- 6 373 223

EP 2 850 715 B1

**Description**

L'invention concerne l'équilibrage de charge pour une batterie et notamment pour une batterie Lithium ion.

Même si l'invention peut trouver des applications dans l'industrie automobile, notamment pour les véhicules électriques et/ou hybrides, l'invention n'est en rien limitée à ces applications. On pourra par exemple prévoir de mettre en oeuvre l'invention dans des systèmes embarqués ou autre.

Une batterie comporte plusieurs cellules de stockage électrochimique, ou accumulateurs électrochimiques, par exemple des cellules Lithium ion, assemblées en série et/ou parallèle.

On cherche à maintenir chaque cellule dans une plage de tension restreinte, afin d'éviter des dégradations irréversibles. Par exemple, dans le cas d'une batterie Lithium ion, il existe un risque d'incendie lorsque la tension d'une cellule est au-delà d'un seuil maximal, et il existe un risque de dégradation irréversible de la cellule lorsque la tension est en-deçà d'un seuil minimal.

Or, lorsqu'un grand nombre de cellules sont assemblées au sein d'un pack, par exemple 96 doublets de cellules au sein de packs batteries pour un véhicule électrique, les cellules sont susceptibles de présenter des caractéristiques légèrement différentes, dont certaines caractéristiques, par exemple le courant d'auto-décharge, le rendement faradique en charge, la charge maximale etc. peuvent influencer directement l'état de charge des cellules. Ainsi, lorsqu'un pack batterie est chargé, on peut donc observer des variations du niveau de charge d'une cellule à l'autre.

Il est connu de placer respectivement en parallèle de chaque cellule ou étage de cellules, une résistance raccordée via un interrupteur, de façon à permettre une décharge éventuelle lorsqu'une cellule est trop chargée. On parle d'équilibrage dissipatif dans la mesure où le trop plein d'énergie est dissipé en chaleur.

Il est également connu de gérer des transferts d'énergie des cellules les plus chargées vers d'autres cellules. De tels systèmes d'équilibrage non dissipatifs peuvent être avantageux en ce sens que la chaleur rayonnée est plus faible, ce qui permet d'éviter d'éventuels dommages pour les cellules et les circuits électroniques voisins. En outre, ces rééquilibrages non dissipatifs, lorsqu'effectués durant la décharge de la batterie, peuvent permettre d'optimiser la répartition des charges individuelles des cellules afin d'arriver à l'état de charge minimale de chaque cellule sensiblement simultanément. Ceci peut permettre alors une plus longue utilisation de la batterie.

On connaît des dispositifs d'équilibrage de charge de batterie comprenant des convertisseurs, chacun des convertisseurs permettant de recharger une seule cellule à la fois. Pour ne pas multiplier le nombre de convertisseurs, on peut prévoir des systèmes de sélection de la cellule à charger ou décharger, à base de transistors notamment, afin de raccorder le secondaire du convertisseur à la cellule sélectionnée. Néanmoins, ces systèmes de sélection peuvent induire des pertes supplémentaires.

Il est par ailleurs connu de charger plusieurs cellules simultanément. On connaît un dispositif d'équilibrage de charge pour batterie comprenant un convertisseur pour recharger simultanément plusieurs cellules d'une batterie. Par exemple le document FR2956260 décrit un tel dispositif. Dans ce document, le convertisseur fonctionne en générateur de tension dont le niveau est régulier pour fournir un courant d'équilibrage prédéterminé à chaque cellule. Son principal inconvénient est que le convertisseur recharge les cellules à courant de charge constant en intensité, ceci quel que soit le nombre de cellules à recharger, conduisant à autant de niveaux de puissance de fonctionnement du convertisseur que de cellules pouvant être rechargées simultanément : un premier niveau correspondant au rechargement de 1 seule cellule, un deuxième niveau correspondant au rechargement de 2 cellules à la fois, un troisième niveau correspondant au rechargement de 3 cellules à la fois, etc. Ceci conduit à utiliser, dans la plupart des cas, le convertisseur loin de sa puissance optimale de fonctionnement et donc induit des pertes énergétiques importantes. Un autre inconvénient est que le fait de travailler à courant constant ne permet pas de recharger plus rapidement un petit nombre de cellules particulièrement déchargées, ce qui peut limiter la performance du système d'équilibrage.

Par conséquent, il existe un besoin pour un dispositif d'équilibrage plus performant.

EP2320537 A2 montre un exemple de circuit d'équilibrage dans lequel les cellules de batteries peuvent être sélectivement rechargées par l'intermédiaire de blocs d'interrupteurs.

Il est proposé un dispositif d'équilibrage selon la revendication 1. Des modes de réalisation sont définis dans les revendications dépendantes.

Ainsi l'invention concerne un dispositif d'équilibrage de charge pour une batterie comprenant un ensemble de cellules de stockage électrochimique, le dispositif comprenant des moyens de charge aptes à assurer la recharge d'une pluralité de combinaisons d'au moins une cellule. Pour au moins une (et avantageusement chaque) combinaison, les moyens de charge sont agencés de façon à assurer la recharge simultanée de toutes les cellules de cette combinaison. La pluralité de combinaisons définit un nombre N de types de combinaison, chaque type de combinaison correspondant à un nombre m de cellules de cette combinaison, dans lequel N est strictement supérieur à 1. Les moyens de charge sont autorisés à fonctionner selon un nombre P de niveaux de puissance, ce nombre P étant strictement inférieur au nombre N de types de combinaisons.

Ainsi, on compte moins de niveaux de puissance que de types de combinaisons (ou jeux) de cellules, ce qui peut permettre aux moyens de charge de fonctionner plus près d'un point de fonctionnement optimal que dans l'art antérieur dans lequel on prévoit un courant prédéterminé pour chaque cellule.

En effet, dans l'art antérieur, la puissance fournie par les moyens de charge est particulièrement liée au nombre de cellules à alimenter simultanément, puisque chaque cellule reçoit un courant prédéterminé. En limitant les niveaux de puissance disponibles, on peut utiliser les moyens de charge, par exemple un convertisseur, plus près de leur puissance optimale de fonctionnement, ce qui peut permettre de limiter les pertes énergétiques et d'augmenter les performances du dispositif d'équilibrage.

Avantageusement et de façon non limitative, les moyens de charge comprennent une pluralité de modules de charge, au moins un (et avantageusement chaque) module de charge correspondant à un groupe de M cellules choisies parmi l'ensemble de cellules de la batterie. Ainsi, chaque module de charge, par exemple un convertisseur, peut permettre de recharger des combinaisons de m cellules parmi les M cellules du groupe correspondant.

Avantageusement, le nombre P est inférieur ou égal à la partie entière de M/2, avantageusement de M/3.

On peut prévoir de limiter le nombre de cellules rechargeables simultanément, ou non. Par exemple, on peut prévoir de limiter le nombre de cellules rechargeables simultanément par un module de charge à 3 cellules. Dans ce cas, N est égal à 3 puisque l'on comptera trois types de combinaisons : les combinaisons d'une seule cellule parmi les M cellules du groupe, les combinaisons de deux cellules parmi les M cellules du groupe et les combinaisons de trois cellules parmi les M cellules du groupe.

Alternativement, on peut prévoir que le module de charge soit apte à recharger simultanément de 1 à M cellules. Dans ce cas, N est égal à M puisqu'on comptera M types de combinaisons. Le premier type de combinaisons correspond à une sélection d'une seule cellule parmi les M cellules du groupe, le deuxième type de jeux correspond à la sélection de deux cellules parmi les M cellules, etc. Le $M^{ième}$ type de jeux correspond à la totalité des M cellules du groupe.

Avantageusement et de façon non limitative, les moyens de charge peuvent être agencés de sorte que chaque cellule du groupe de cellules correspondant à ces moyens de charge puisse être chargée indépendamment des autres cellules de ce groupe. Dit autrement, les cellules peuvent être sélectionnées individuellement.

Dans un mode de réalisation, le nombre P de niveau de puissance est égal à 1. Ainsi, les moyens de charge fonctionnent à un seul niveau de puissance, et ce quel que soit le nombre de cellules à recharger simultanément. Ce mode de réalisation peut en outre être avantageux en ce sens que lorsqu'une seule cellule du groupe de cellules présente un niveau de charge moindre, cette cellule est rechargée relativement vite puisque le convertisseur effectue la recharge avec un courant relativement important de sorte que cette cellule s'avère limitante pendant une durée relativement limitée.

Dans un autre mode de réalisation, on pourra prévoir une pluralité de niveaux de puissance, par exemple deux, trois ou quatre niveaux de puissance. Ceci peut permettre de limiter les courants de charge, notamment lorsque le nombre de cellules sélectionnées pour la charge est relativement faible. Ainsi, dans ce mode de réalisation, le câblage et la circuiterie peuvent être relativement simples dans la mesure où les courants de charge resteront limités.

Par exemple, on peut prévoir trois niveaux de puissance :

- un niveau de puissance à 16 watts correspondant à la charge d'une seule cellule. Dans la mesure où la tension de la cellule est proche de 4V, un niveau de puissance de 16 watts correspond à un courant de charge proche de 4A.
- un niveau de puissance de 32 watts correspondant à la charge simultanée de deux cellules, ce qui correspond là encore à des courants de charge de l'ordre de 4A.
- un niveau de puissance de 48 watts correspondant à la charge simultanée de trois cellules ou davantage.

Dans le cas où le convertisseur assure la charge d'exactement trois cellules, chaque cellule recevra sensiblement un courant de 4A. Si le convertisseur doit assurer la charge de quatre cellules le courant affecté à chaque cellule sera proche de 3A. Pour une charge simultanée de six cellules, le courant correspondant à une cellule sera proche de 2A. Ainsi, le courant correspondant à une cellule diminue lorsque le nombre de cellules augmente. Néanmoins, cette diminution reste relative.

L'invention n'est pas limitée par la forme des moyens de charge, même si avantageusement les moyens de charge peuvent comprendre un convertisseur apte à convertir de l'énergie reçue. On pourra par exemple prévoir des moyens de charge intégrant une batterie additionnelle, dédiée à l'équilibrage, ainsi que des moyens de raccordement de la batterie additionnelle aux cellules de la batterie à équilibrer.

L'invention n'est pas non plus limitée par la source d'énergie reçue par le convertisseur.

Avantageusement et de façon non limitative, on pourra prévoir de raccorder les moyens de charge, par exemple un convertisseur, à un réseau de plus basse tension que celle délivrée par la batterie à équilibrer.

Avantageusement et de façon non limitative, ce réseau de plus basse tension peut être alimenté par la batterie à équilibrer.

Dans le cas d'un véhicule automobile, le réseau de 14V est lui-même alimenté par un réseau haute tension alimenté par la batterie à équilibrer. Ainsi, on vient prélever de l'énergie sur l'ensemble des cellules de la batterie, et ce de façon indirecte. Le choix du réseau 14V est en outre avantageux en ce sens que l'énergie reçue par le convertisseur a une tension relativement faible, ce qui peut limiter les contraintes de conception du convertisseur et de la circuiterie.

Dans un autre mode de réalisation, on pourra prévoir de raccorder l'entrée du convertisseur à au moins certaines des cellules de la batterie à équilibrer de façon à recevoir de l'énergie directement issue de ces cellules, par exemple au groupe de cellules ou bien à l'ensemble des cellules de la batterie. Dans le premier cas, on peut éviter les courants et tensions trop élevés à l'entrée du convertisseur. Dans le deuxième cas, la décharge liée à l'équilibrage est peu sensible puisque répartie sur l'ensemble des cellules.

L'ensemble de cellules peut comprendre un nombre de cellules par exemple de l'ordre de la centaine. Le groupe de cellules peut comprendre un nombre de cellules plus faible que le nombre de cellules de l'ensemble de cellules par exemple, un nombre de cellules de l'ordre de la dizaine.

Avantageusement et de façon non limitative, les moyens de charge peuvent comprendre une pluralité d'interrupteurs pour raccorder de façon réversible le convertisseur aux cellules du groupe de cellules.

Avantageusement et de façon non limitative, les moyens de charge peuvent comprendre des moyens de traitement aptes à générer des signaux pour commander les interrupteurs. De tels moyens de traitement peuvent être agencés pour effectuer la détection des cellules à recharger, en fonction de leur niveau de charge courant et pour piloter les moyens de charge de façon à sélectionner ces cellules à recharger.

Avantageusement et de façon non limitative, ces moyens de traitement peuvent être agencés pour déterminer le niveau de puissance de fonctionnement du convertisseur, en fonction du nombre de cellules à alimenter.

Dans un mode de réalisation, les moyens de charge peuvent comprendre un enroulement primaire raccordé à un onduleur, et, pour chaque cellule du groupe de cellules correspondant à ces moyens de charge, un enroulement secondaire ainsi qu'un redresseur.

Avantageusement et de façon non limitative, les moyens de traitement peuvent commander l'onduleur et/ou les redresseurs, en contrôlant les courants de charge de façon à placer le convertisseur dans un niveau de puissance reçue choisi parmi un nombre P de niveaux de puissance strictement inférieur au nombre N de types de combinaisons.

L'invention n'est pas limitée par la forme du convertisseur. On pourra par exemple prévoir un hacheur, un convertisseur à pompe de charge ou autre.

Il est en outre proposé un système d'alimentation électrique, notamment pour un véhicule automobile, comprenant une batterie et un dispositif d'équilibrage tel que décrit ci-dessus.

Dans le cadre d'une application à des véhicules électriques et/ou hybrides, la batterie à équilibrer peut être apte à alimenter un système de traction du véhicule.

Il est en outre proposé un véhicule automobile, par exemple un véhicule électrique ou hybride, comprenant un système d'alimentation électrique tel que décrit ci-dessus.

Il est en outre proposé un procédé de gestion d'un dispositif d'équilibrage de charge pour une batterie comprenant un ensemble de cellules de stockage électrochimique, le dispositif d'équilibrage comportant des moyens de charge aptes à recharger simultanément plusieurs cellules, le procédé comprenant :

- sélectionner une combinaison d'au moins une cellule à recharger simultanément parmi une pluralité de combinaisons, ladite pluralité de combinaisons définissant un nombre N strictement supérieur à un de types de combinaison, chaque type de combinaison correspondant à un nombre m de cellules de cette combinaison, et
- imposer au convertisseur un niveau de puissance choisi parmi un nombre P de niveaux de puissance, ledit nombre P étant strictement inférieur au nombre N de types de combinaisons.

Ce procédé peut par exemple être mis en oeuvre dans le dispositif d'équilibrage décrit ci-dessus ou dans un dispositif de gestion distinct ou intégré dans le dispositif d'équilibrage.

Ce dispositif de gestion peut comprendre ou être intégré dans un dispositif de traitement numérique ou analogique du signal, par exemple un processeur.

Ce dispositif de gestion peut notamment piloter :

- un élément de réception de charge des moyens de charge, par exemple un enroulement primaire, et/ou
- un élément de transmission de charge des moyens de charge, par exemple un redresseur et/ou un enroulement secondaire.

Ce pilotage peut être effectué de façon à augmenter les courants de charge de chaque cellule sélectionnée pour la charge, lorsque le nombre de cellules sélectionnées diminue. Le procédé peut ainsi comprendre une étape consistant à déterminer au moins un courant de charge de cellule en fonction du nombre de cellules de la combinaison de cellules à recharger, de sorte que le niveau de puissance des moyens de charge soit un niveau choisi parmi un nombre P de niveaux, P étant strictement inférieur au nombre N de types de combinaisons.

Lorsque le nombre de niveaux de puissance est supérieur à un, le procédé peut comprendre une étape consistant à déterminer un niveau de puissance en fonction du nombre de cellules à recharger.

Il est en outre proposé un dispositif de gestion d'un dispositif d'équilibrage de charge pour une batterie comprenant un ensemble de cellules de stockages électrochimique. Le dispositif d'équilibrage comporte des moyens de charge aptes à assurer la recharge d'une pluralité de combinaisons d'au moins une cellule, dans lequel pour chaque combinaison de la pluralité de combinaisons, les moyens de charge sont agencés de façon à assurer la recharge simultanée de toutes les cellules de ladite combinaison, et dans lequel la pluralité de combinaisons définit un nombre N strictement supérieur à un de types de combinaison, chaque type de combinaison correspondant à un nombre m de cellules de cette combinaison. Le dispositif de gestion est agencé pour imposer aux moyens de charge un niveau de puissance choisi parmi un nombre P de niveaux de puissance, ledit nombre P étant strictement inférieur au nombre N de types de combinaisons.

Avantageusement, le dispositif de gestion peut être en outre agencé pour sélectionner les combinaisons de cellule(s) à recharger, en fonction de valeurs de niveau de charge de cellules de la batterie.

L'invention sera mieux comprise en référence aux figures, lesquelles illustrent des modes de réalisation non limitatifs.

La figure 1 montre schématiquement un exemple de système d'alimentation électrique pour un véhicule automobile, selon un mode de réalisation de l'invention.

La figure 2 montre schématiquement un exemple de dispositif d'équilibrage de charge de batterie, selon un mode de réalisation de l'invention.

Des références identiques peuvent être utilisées d'une figure à l'autre pour désigner des éléments identiques ou similaires.

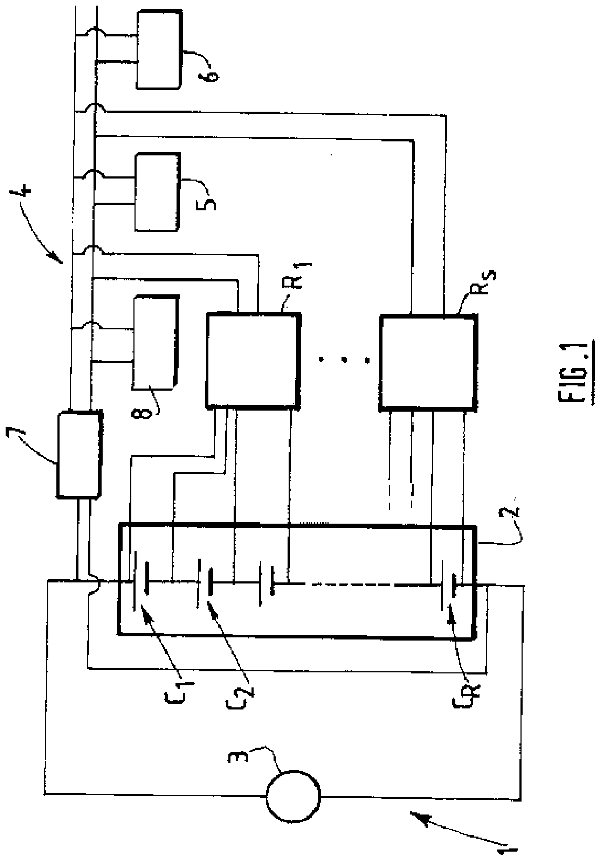

En référence à la figure 1, un réseau haute tension 1 est alimenté par une batterie haute tension 2 comprenant un ensemble de R cellules électriques $C_1$, $C_2$,..., $C_R$. Cette batterie Lithium ion 2 permet notamment d'alimenter un moteur électrique 3, et ainsi d'assurer la traction d'un véhicule automobile. La batterie 2 permet de fournir une tension comprise entre 70 volts et 400 volts par exemple.

Le véhicule comprend en outre un réseau basse tension 4 permettant de fournir à des auxiliaires 5, 6 une tension comprise entre 10 volts et 16 volts, par exemple une tension de 14 volts. Ces auxiliaires 5, 6 peuvent par exemple comprendre l'actionneur de la direction assistée d'un véhicule ou autre.

Le réseau basse tension 4 est raccordé au réseau haute tension 1 par l'intermédiaire d'un convertisseur DC/DC 7. Pour assurer la recharge d'une batterie basse tension 8 du réseau basse tension 4, par exemple une batterie au plomb, de l'énergie est prélevée à la batterie haute tension 2 au moyen de ce convertisseur 7.

Toutes les cellules $C_1$, $C_2$,..., $C_R$ montées en série dans la batterie haute tension 2 subissent la même variation de charge lorsque l'on recharge la batterie basse tension 8.

Le système comprend en outre un nombre S de convertisseurs $R_1$...$R_S$. Chaque convertisseur $R_1$,..., $R_S$ permet de recharger des cellules parmi un groupe de M cellules correspondant à ce convertisseur. Ce groupe de M cellules, par exemple de 12 cellules, est choisi parmi les R cellules de la batterie 2.

Par exemple la batterie 2 comporte 96 cellules $C_1$, $C_2$... $C_R$. Ces 96 cellules sont réparties en 8 groupes de 12 cellules chacun. Dans cet exemple, le nombre S de convertisseurs est donc égal à 8, et le nombre R de cellules est égal à 96. Le nombre M de cellules par groupe est de 12.

Dans ce mode de réalisation, les S convertisseurs $R_1$,..., $R_S$ sont raccordés au réseau 14V 4 via leurs enroulements primaires respectifs, et permettent de transférer de l'énergie vers une ou plusieurs cellules parmi les M cellules respectives auxquelles ils sont connectés par leurs enroulements secondaires.

Ainsi ces S convertisseurs prélèvent-ils de l'énergie sur le réseau basse tension 4, ce réseau basse tension étant lui-même alimenté par la batterie haute tension 2. Dit autrement, ces convertisseurs $R_1$,..., $R_S$ utilisent indirectement de l'énergie prélevée sur l'ensemble des R cellules $C_1$, $C_2$... $C_R$ de la batterie haute tension 2.

L'énergie prélevée est donc répartie sur l'ensemble de ces R cellules ce qui peut permettre d'éviter les déséquilibres de charge d'un groupe à l'autre.

En outre, la tension côté primaire des convertisseurs $R_1$,..., $R_S$ étant de 14 volts seulement, ces convertisseurs $R_1$,..., $R_S$ peuvent être de conception relativement simple et adaptés aux basses tensions.

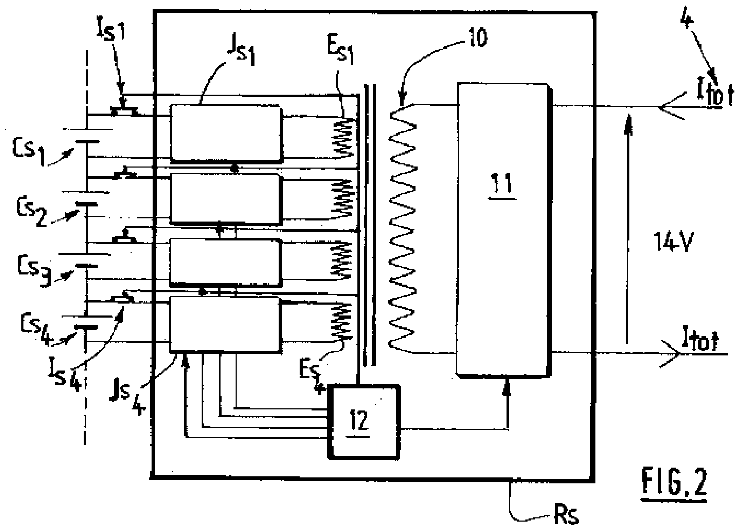

La figure 2 montre de façon plus détaillée un exemple de convertisseur $R_s$. Dans cet exemple, le convertisseur $R_s$ est raccordé à seulement quatre cellules $C_{s1}$, $C_{s2}$, $C_{s3}$, $C_{s4}$, pour des raisons de clarté mais on comprendra que le nombre de cellules peut être différent de 4, et notamment être égal à 12.

Le convertisseur $R_s$ comprend un enroulement primaire 10 raccordé par l'intermédiaire d'un onduleur 11 au réseau 14V 4.

Par ailleurs, le convertisseur $R_s$ présente autant d'enroulements secondaires $E_{s1}$,..., $E_{s4}$ que de cellules $C_{s1}$, $C_{s2}$, $C_{s3}$, $C_{s4}$ auquel le convertisseur $R_s$ est raccordable. Ainsi, un convertisseur $R_s$ correspondant à un groupe de M cellules comprendra M enroulements secondaires.

Outre un enroulement secondaire correspondant à cette cellule, le convertisseur $R_s$ comprend pour chacune des M cellules auquel il est raccordé, un interrupteur $I_{s1}$, ..., $I_{s4}$.

Sur la figure 2, les interrupteurs $I_{s1}$, ..., $I_{s4}$ ont été représentés à l'extérieur du boitier correspondant au convertisseur $R_s$, mais on comprendra qu'avantageusement ces interrupteurs peuvent être intégrés à l'intérieur de ce boitier.

Chaque interrupteur $I_{s1}$, ..., $I_{s4}$ est disposé de façon à pouvoir établir un raccordement entre la cellule correspondante et l'enroulement secondaire correspondant. Chaque interrupteur $I_{s1}$ ... $I_{s4}$ est commandé électriquement par des moyens de traitement 12, par exemple une unité de contrôle électronique ou ECU (de l'anglais « Electronic Control Unit »).

Les moyens de traitement 12 peuvent comprendre ou être intégrés dans un processeur, par exemple un microcontrôleur, un microprocesseur, ou autre.

Le convertisseur $R_S$ comprend en outre, pour chaque cellule du groupe de M cellules auquel il est raccordé, un redresseur $J_{s1}$,..., $J_{s4}$.

L'onduleur 10 et les redresseurs $J_{s1}$,..., $J_{s4}$ sont pilotés par les moyens de traitement 12, de sorte que ces moyens de traitement 12 contrôlent l'intensité du courant reçu $I_{tot}$ par le convertisseur et des courants de charge des cellules $C_{s1}$, $C_{s2}$, $C_{s3}$, $C_{s4}$.

Dans un mode de réalisation, chacun des convertisseurs d'équilibrage $R_1$,..., $R_S$ est unidirectionnel. Dit autrement, chacun de ces convertisseurs $R_1$,..., $R_S$ permet de transférer de l'énergie du réseau basse tension vers la ou les cellules auxquelles il est raccordé, mais interdit les transferts d'énergie dans le sens inverse.

Dans ce mode de réalisation, chaque convertisseur $R_1$,..., $R_S$ fonctionne à puissance constante ce qui signifie que dès lors qu'au moins une cellule est sélectionnée pour la recharge, ce qui implique une fermeture de l'interrupteur commandé associé à cette cellule, la puissance prélevée au primaire est fixée à une valeur prédéterminée $P_0$. Ainsi, le courant parcourant chaque cellule raccordée à l'enroulement secondaire du convertisseur est fonction du nombre de cellules à recharger.

Plus précisément, en notant $\eta$ le rendement global du système de transfert d'énergie, incluant les pertes liées au convertisseur, aux commandes et aux câbles on aurait alors :

$$\eta = \frac{P_{out}}{P_{in}} = \frac{\sum_{i=1}^{M} V_i \cdot I_i \cdot \delta_i}{V_{14V} \cdot I_{tot}} = \frac{\sum_{i=1}^{M} V_i \cdot I_i \cdot \delta_i}{P_0}$$

$$\Leftrightarrow \sum_{i=1}^{M} V_i \cdot I_i \cdot \delta_i = P_0 \cdot \eta$$

relation dans laquelle

$V_{14v}$ est la tension du réseau basse tension, typiquement 14 volts,
$I_{tot}$ est le courant total prélevé sur le réseau basse tension du côté primaire du convertisseur,
$V_i$ est la tension de la cellule repérée par l'indice i avec i compris entre 1 et M,
$I_i$ est le courant d'équilibrage parcourant la cellule i lors de la recharge de cette cellule,
$\delta_i$ est un signal booléen valant 1 si la cellule i est en recharge, c'est-à-dire si l'interrupteur associé à cette cellule est fermé, et 0 dans le cas contraire.

Ainsi, lorsqu'une seule cellule parmi les M cellules associées à ce convertisseur est en recharge, le courant qui parcourt cette cellule est environ M fois plus important que lorsque toutes les M cellules sont en recharge, l'approximation venant notamment du fait que toutes les cellules du groupe de M cellules n'ont pas forcément exactement la même tension.

Ainsi, la vitesse de recharge des cellules est d'autant plus importante que le nombre de cellules à recharger est réduit.

Les systèmes d'équilibrage non dissipatifs sont d'autant plus intéressants qu'ils permettent d'assurer, lors de la décharge de l'ensemble des cellules de la batterie 4, qu'un maximum de (et avantageusement toutes les) cellules atteignent simultanément leur niveau de charge minimale afin d'exploiter au mieux l'énergie contenue dans la batterie 4.

En présence de dispersion de capacité sur les cellules, la cellule de moindre capacité au sein de l'ensemble de cellules de la batterie 4 sera celle qui atteint son seuil bas le plus tôt interdisant toute utilisation supplémentaire de la batterie 4. Les convertisseurs $R_1$,..., $R_S$ permettent de recharger dans un premier temps et rapidement cette cellule de charge minimale. Ces convertisseurs permettent ainsi une meilleure utilisation de la batterie du fait que cette cellule limitante peut atteindre son seuil bas plus tardivement.

En prévoyant un seul niveau de puissance $P_0$ dans le cas d'une seule cellule de charge minimale, cette cellule de charge minimale est parcourue par un courant d'équilibrage relativement important, ce qui permet de ramener rapidement cette cellule limitante au même niveau de charge que la deuxième cellule la moins chargée, avant de commander la recharge simultanée de ces deux cellules, et ainsi de suite jusqu'à avoir équilibré l'ensemble du groupe de M cellules.

Dit autrement, en prévoyant un seul niveau de puissance, on peut converger plus rapidement vers un état d'équilibre que dans l'art antérieur, dans lequel le convertisseur d'équilibrage fonctionne en générateur de tension dont le niveau est régulé pour fournir un courant d'équilibrage prédéterminé. Le dispositif décrit, dans lequel le convertisseur fonctionne en générateur de courant conduit à un courant d'équilibrage pour chaque cellule d'autant plus important que peu de cellules sont en cours d'équilibrage.

Un autre avantage, lié à ce fonctionnement à puissance constante est que la conception de chaque convertisseur peut être optimisée autour d'un point de fonctionnement unique, ce qui permet d'obtenir un meilleur rendement pour le transfert d'énergie. On peut ainsi concilier recharge simultanée de plusieurs cellules et fonctionnement proche d'un point de fonctionnement.

Les convertisseurs utilisés pour recharger une ou plusieurs cellules des groupes de cellules correspondants respectifs sont alimentés par le réseau d'auxiliaires du véhicule électrique. Ainsi, recharger une ou plusieurs cellules s'accompagne d'une légère décharge de l'ensemble des cellules, puisque l'alimentation du réseau basse tension 4 est réalisée au moyen du convertisseur référencé 7 sur la figure 1, lequel prélève sa puissance sur l'ensemble des cellules $C_1 C_2,...C_R$ de la batterie haute tension 2. Ceci peut permettre d'accroître encore la vitesse d'équilibrage du pack de cellules 2, puisque les cellules non rechargées, qui ont donc un état de charge supérieur aux autres, se déchargent légèrement au fur et à mesure que l'on recharge les cellules les moins chargées. On peut ainsi équilibrer un ensemble de cellules sans faire appel à un deuxième étage de convertisseur qui permettrait d'assurer des transferts de groupe de cellules à groupe de cellules.

Dans un autre mode de réalisation, le système proposé peut fonctionner à puissance pseudo-constante Dit autrement, chaque convertisseur peut être capable de fonctionner suivant plusieurs niveaux de puissance, par exemple trois niveaux de puissance.

Par exemple, lorsqu'une seule cellule parmi le groupe de M cellules est en charge, la puissance prélevée au primaire du convertisseur $R_s$ est fixée à une valeur $P_1$. Cette valeur $P_1$ est inférieure à la valeur $P_0$ correspondant à un niveau de puissance unique du mode de réalisation précédent.

Lorsque deux cellules sont en charge, la puissance prélevée au primaire du groupe du convertisseur est fixée à une valeur $P_2$ comprise entre $P_1$ et $P_0$, et strictement différentes de ces deux autres valeurs de puissance. Lorsqu'au moins trois cellules sont en charge, la puissance prélevée au primaire du convertisseur peut être fixée à une valeur $P_3$ égale à la valeur $P_0$.

Prévoir trois niveaux de puissance peut permettre de choisir des composants standards pour le dispositif d'équilibrage, notamment les composants au secondaire du convertisseur, et en particulier les transistors et/ou les diodes pour le redressement, les câbles, et les divers composants situés sur le chemin de puissance, les enroulements du convertisseur etc.

Par exemple, pour un groupe de M= 12 cellules, la puissance $P_3$ égale à $P_0$ peut être choisie égale à 36 watts, la puissance $P_1$ peut être choisie égale à 12 watts, et la puissance $P_2$ peut être choisie égale à 24 watts. Pour une tension cellule autour de 4 volts, le courant équilibrage sera ainsi proche de 3 ampères lorsque une, deux ou trois cellules est en charge et diminuera ensuite pour un nombre de cellules supérieur à 3 jusqu'à atteindre environ 0,75 ampères lorsque les 12 cellules sont en charge. Bien entendu, ces ordres de grandeur ne sont donnés qu'à titre indicatif.

Dans un autre mode de réalisation, on peut prévoir que les convertisseurs soient alimentés côté primaire non pas sur le réseau basse tension d'un véhicule automobile, mais directement sur l'ensemble de cellules de la batterie haute tension. Ainsi le convertisseur est connecté à cette batterie à la fois côté primaire et à la fois côté secondaire. Cette variante permet d'effectuer le rééquilibrage, même pour des applications dans lesquelles aucun réseau basse tension n'est prévu, notamment des applications dans l'industrie ou sur des systèmes embarqués, par exemple, pour des batteries d'ordinateur portable, de panneau solaire ou autre. Cette variante peut donc permettre un fonctionnement du système de façon autonome.

Les convertisseurs peuvent par exemple être raccordés côté primaire aux bornes d'un groupe de M cellules ou bien aux bornes de la batterie 2, et côté secondaire aux bornes de chacune des M cellules à équilibrer.

Lorsque le convertisseur est raccordé aux bornes du groupe de M cellules côté primaire et individuellement aux M cellules côté secondaire, l'équilibrage est effectué au sein de ce groupe de M cellules. Les tensions à gérer par le convertisseur restent dans des mêmes ordres de grandeur.

Lorsque le convertisseur est raccordé côté primaire aux bornes de la batterie 2, et, côté secondaire simplement au groupe de 12 cellules les tensions côté primaire peuvent être plus élevées, mais en revanche, cette architecture permet d'équilibrer entre elles les charges moyennes des groupes de M cellules.

**Revendications**

1. Dispositif d'équilibrage de charge pour une batterie (2) comprenant un ensemble de cellules de stockage électro-chimique ($C_1$, $C_2$,..., $C_R$), le dispositif comprenant

   des moyens de charge ($R_1$,..., $R_S$) comprenant au moins un convertisseur, chaque convertisseur correspondant à un groupe de M cellules choisies parmi l'ensemble de cellules de la batterie et aptes à assurer la recharge d'une pluralité de combinaisons de m cellules parmi les M cellules du groupe correspondant,
   dans lequel
   pour chaque combinaison, les moyens de charge sont agencés de façon à assurer la recharge simultanée de toutes les cellules de ladite combinaison,
   la pluralité de combinaisons définit un nombre N de types de combinaison, où N est strictement supérieur à 1, chaque type de combinaison correspondant à un nombre m de cellules de cette combinaison, et
   les moyens de charge sont autorisés à fonctionner selon un nombre P de niveaux de puissance, ce nombre P étant strictement inférieur au nombre N de types de combinaisons,
   dans lequel chaque convertisseur comprend :

   un enroulement primaire (10) raccordé à un onduleur (11),
   M enroulements secondaires ($E_{s1}$,..., $E_{s4}$) raccordés respectivement aux M cellules du groupe correspondant par l'intermédiaire d'un redresseur ($J_{s1}$,..., $J_{s4}$) et d'un interrupteur ($I_{s1}$,..., $I_{s4}$) pour chacune des M cellules, des moyens de traitement (12) aptes à piloter les interrupteurs, l'onduleur et/ou les redresseurs pour sélectionner un nombre réduit de cellules à recharger inférieur à M de sorte à augmenter les courants de charge de chaque cellule à recharger sélectionnée lorsque le nombre de cellules sélectionnées diminue.

2. Dispositif d'équilibrage selon la revendication 1, dans lequel le nombre P de niveaux de puissance des moyens de charge est égal à un.

3. Dispositif d'équilibrage selon la revendication 1, dans lequel le nombre P de niveaux de puissance des moyens de charge est strictement supérieur à un.

4. Dispositif d'équilibrage selon l'une quelconque des revendications précédentes, dans lequel au moins un convertisseur ($R_1$,..., $R_S$) est disposé de façon à recevoir de l'énergie d'un réseau (4) de tension plus basse que la tension délivrée par la batterie (2), ledit réseau étant alimenté par ladite batterie.

5. Dispositif d'équilibrage selon l'une quelconque des revendications précédentes, dans lequel au moins un convertisseur est raccordé à au moins certaines des cellules de la batterie de façon à recevoir de l'énergie directement issue desdites cellules.

6. Système d'alimentation électrique pour un véhicule automobile comprenant
   une batterie (2) apte à alimenter un système de traction du véhicule automobile, et
   un dispositif d'équilibrage selon l'une des revendications 1 à 5.

7. Véhicule automobile comprenant un système d'alimentation électrique selon la revendication 6.

**Patentansprüche**

1. Ladungsausgleichsvorrichtung für eine Batterie (2), die einen Satz elektrochemischer Speicherzellen ($C_1$, $C_2$, ..., $C_R$) umfasst, wobei die Vorrichtung umfasst
   Lademittel ($R_1$, ..., $R_S$), die mindestens einen Wandler umfassen, wobei jeder Wandler einer Gruppe von M Zellen entspricht, die aus dem Satz Zellen der Batterie gewählt und dazu in der Lage sind, das Wiederaufladen einer Vielzahl von Kombinationen von m Zellen aus den M Zellen der entsprechenden Gruppe sicherzustellen, wobei
   bei jeder Kombination die Lademittel so eingerichtet sind, dass sie das gleichzeitige Wiederaufladen aller der Zellen der Kombination sicherstellen,
   die Vielzahl von Kombinationen eine Anzahl N von Kombinationstypen definiert, wobei N strikt größer als 1 ist, wobei jeder Kombinationstyp einer Anzahl m von Zellen dieser Kombination entspricht, und
   es den Lademitteln gestattet ist, gemäß einer Anzahl P von Leistungsstufen zu funktionieren, wobei diese Anzahl P strikt kleiner als die Anzahl N von Kombinationstypen ist,

wobei jeder Wandler umfasst:

eine Primärwicklung (10), die an einen Wechselrichter (11) angeschlossen ist,
M Sekundärwicklungen ($E_{s1}$, ..., $E_{s4}$), die bei jeder der M Zellen mittels eines Gleichrichters ($J_{s1}$, ..., $J_{s4}$) und eines Schalters ($I_{s1}$, ..., $I_{s4}$) jeweils an die M Zellen der entsprechenden Gruppe angeschlossen sind,
Verarbeitungsmittel (12), die dazu in der Lage sind, die Schalter, den Wechselrichter und/oder die Gleichrichter zu steuern, um eine reduzierte Anzahl von wiederaufzuladenden Zellen auszuwählen, die kleiner als M ist, um die Ladeströme jeder ausgewählten, wiederaufzuladenden Zelle zu erhöhen, wenn die Anzahl von ausgewählten Zellen abnimmt.

2. Ausgleichsvorrichtung nach Anspruch 1, wobei die Anzahl P von Leistungsstufen der Lademittel gleich eins ist.

3. Ausgleichsvorrichtung nach Anspruch 1, wobei die Anzahl P von Leistungsstufen der Lademittel strikt größer als eins ist.

4. Ausgleichsvorrichtung nach einem der vorstehenden Ansprüche, wobei mindestens ein Wandler ($R_1$, ..., $R_S$) so angeordnet ist, dass er Energie aus einem Netz (4) mit einer Spannung empfängt, die niedriger ist als die von der Batterie (2) gelieferte Spannung, wobei das Netz von der Batterie gespeist wird.

5. Ausgleichsvorrichtung nach einem der vorstehenden Ansprüche, wobei mindestens ein Wandler an mindestens gewisse der Zellen der Batterie angeschlossen ist, um Energie zu empfangen, die direkt aus den Zellen stammt.

6. Elektrisches Speisesystem für ein Kraftfahrzeug, umfassend
eine Batterie (2), die dazu in der Lage ist, ein Antriebssystem des Kraftfahrzeugs zu speisen, und
eine Ausgleichsvorrichtung nach einem der Ansprüche 1 bis 5.

7. Kraftfahrzeug, das ein elektrisches Speisesystem nach Anspruch 6 umfasst.

**Claims**

1. A charge balancing device in a battery (2) comprising a set of electrochemical storage cells ($C_1$, $C_2$,..., $C_R$), the device comprising
charging means ($R_1$,..., $R_S$) comprising at least one converter, each converter corresponding to a group of M cells selected from among the set of cells of the battery, and capable of ensuring the recharging of a plurality of combinations of m cells from among the M cells of the corresponding group,
wherein
for each combination, the charging means are arranged in order to simultaneously recharge all the cells in said combination,
the plurality of combinations defines a number N of combination types, wherein N is strictly higher than 1, each combination type corresponding to a number m of cells in said combination, and
the charging means are permitted to function at a number P of power levels, whereby the number P is strictly lower than the number N of combination types,
wherein each converter comprises:

a primary winding (10) connector to an inverter (11),
M secondary windings ($E_{s1}$,..., $E_{s4}$) connected respectively to the M cells of the corresponding group by way of a rectifier ($J_{s1}$,..., $J_{s4}$) and a switch ($I_{s1}$,..., $I_{s4}$) for each of the M cells,
processing means (12) for the control of switches, the inverter and/or the rectifiers to select a reduced number of cells to be recharged less than M, so as to increase the charge currents of each cell to be recharged selected when the number of cells selected decreases.

2. The balancing device as claimed in claim 1, wherein the number P of power levels of the charging means is equal to one.

3. The balancing device as claimed in claim 1, wherein the number P of power levels of the charging means is strictly higher than one.

**4.** The balancing device as claimed in any one of the preceding claims, wherein at least one converter ($R_1$,..., $R_S$) is arranged to receive energy from a low-voltage network (4) of lower voltage rating than the voltage delivered by the battery (2), said network being supplied by said battery.

**5.** The balancing device as claimed in any one of the preceding claims, wherein at least one converter is connected to at least some of the cells of the battery to receive energy directly from said cells.

**6.** An electricity supply system for a motor vehicle, comprising
a battery (2) which is capable of supplying a motor vehicle propulsion system, and
a balancing device as claimed in one of claims 1 to 5.

**7.** A motor vehicle comprising an electricity supply system as claimed in claim 6.

FIG.1

EP 2 850 715 B1

FIG.2

EP 2 850 715 B1

**EP 2 850 715 B1**

**RÉFÉRENCES CITÉES DANS LA DESCRIPTION**

**Documents brevets cités dans la description**

- FR 2956260

- EP 2320537 A2